# EUROPÄISCHE PATENTANMELDUNG

(11) **EP 0 649 080 A1**
(43) Veröffentlichungstag der Anmeldung: **19.04.1995**
(21) Anmeldenummer: 94115873.5
(22) Anmeldetag: 07.10.1994
(51) Int. Cl.: G06F 1/00

(54) **Verfahren zur Sicherung sicherheitsrelevanter Informationen**

(30) Priorität: 15.10.1993 DE 4335277
(71) Anmelder: Siemens Nixdorf Informationssysteme AG, D-33106 Paderborn (DE)
(72) Erfinder: Hewel, Harald Dipl.-Ing., D-86551 Aichach (DE); Jost, Hildegard Dipl.-Math., D-81667 München (DE); Kruse, Dietrich Dipl.-Ing., D-85521 Ottobrunn (DE)
(74) Vertreter: Fuchs, Franz-Josef, Dr.-Ing.

(57) **Zusammenfassung**

Sicherheitsrelevante Informationen, wie beispielsweise kryptografische Schlüssel, sind im Sicherheitsmodul (SM) eines Terminals gespeichert. Das Terminal (T) ist mit einer zentralen Datenverarbeitungsanlage (DVA) gekoppelt. Vor einem Datenaustausch zwischen Terminal /T) und Datenverarbeitungsanlage (DVA) erfolgt eine Authentifikation. Bei dieser Authentifikation teilt das Sicherheitsmodul (SM) der Datenverarbeitungsanlage (DVA) einen Zeitabstand in verschlüsselter Weise mit, nach dessen Ablauf eine nochmalige Authentifikation von der Datenverarbeitungsanlage (DVA) anzustoßen ist. Wird diese nochmalige Authentifikation nicht rechtzeitig angestoßen, werden die im Sicherheitsmodul (SM) enthaltenen sicherheitsrelevanten Informationen gelöscht.

## Beschreibung

Die Erfindung betrifft ein Verfahren zur Sicherung sicherheitsrelevanter Informationen in einem mit einer zentralen Datenverarbeitungsanlage gekoppelten Sicherheitsmodul eines Terminals. Solche Sicherheitsmodule werden in Terminals zur Absicherung der Datenübertragung eingesetzt, wenn Anwendungen im militärischen Bereich, im Bankwesen oder ganz allgemein im Bereich der elektrischen oder optischen Übertragung von personenbezogenen oder sonstigen zu schützenden Daten vorgesehen sind. Sicherheitsrelevante Informationen sind beispielsweise kryptografische Schlüssel.

Es sind bereits verschiedene Methoden bekannt, mit denen die sicherheitsrelevanten Informationen in einem Sicherheitsmodul geschützt werden können. Eine einfache aber unpraktikable Möglichkeit ist es, die Sicherheitsmodule nur unter Aufsicht von Sicherheitspersonal zu verwenden und bei Nichtbenutzung die Sicherheitsmodule in einem Tresor wegzuschließen. Weitere Möglichkeiten sind aus einem Prospekt der Firma GAO mbH mit dem Titel "EFT-POS-Terminal" bekannt. Dort ist beschrieben, die sicherheitsrelevanten Bestandteile, die die sicherheitsrelevanten Informationen enthalten, mit einer vergußmasse zu überdecken, das Sicherheitsmodul vollständig mit einem Gehäuse zu umschließen und durch einen Lichtsensor sicherzustellen, daß die sicherheitsrelevanten Informationen bei Einfall von Licht in das Gehäuse gelöscht werden. Ferner ist aus DE 41 15 703 bekannt, Leiterstrukturen am Gehäuse des Sicherheitsmoduls vorzusehen, die bei mechanischer Beeinträchtigung das Löschen sicherheitsrelevanter Informationen bewirken. Ferner ist es bekannt, die sicherheitsrelevanten Daten bei Spannungsausfall oder Unterschreiten einer Schwellenspannung oder Veränderung des Systemtaktes zu löschen. Die sicherheitsrelevanten Daten können auch durch einen logischen Zugriffsschutz, mit dessen Hilfe ein Auslesen der sicherheitsrelevanten Daten im Klartext verhindert wird, geschützt werden.

Die bekannten Schutzmaßnahmen sind jedoch nicht in der Lage, bei einem möglichen Diebstahl des Sicherheitsmoduls aus dem Terminal ein zuverlässiges Löschen der sicherheitsrelevanten Informationen im Sicherheitsmodul zu gewährleisten. Werden Spannungs- und Taktversorgung aufrechterhalten, kann das Sicherheitsmodul mit den sicherheitsrelevanten Daten aus dem Einflußbereich des Terminals entfernt werden.

Der vorliegenden Erfindung liegt deshalb die Aufgabe zugrunde, ein Verfahren zur Sicherung sicherheitsrelevanter Informationen in einem mit einer zentralen Datenverarbeitungsanlage gekoppelten Sicherheitsmodul eines Terminals aufzuzeigen, das ein Entfernen des Sicherheitsmoduls aus dem Einflußbereich der Datenverarbeitungsanlage einschließlich der im Sicherheitsmodul enthaltenen sicherheitsrelevanten Informationen zuverlässig verhindert.

Diese Aufgabe wird durch die im Patentanspruch 1 angegebenen Merkmale gelöst. Bei Überschreitung des Zeitabstandes zur Wiederholung der Authentifikationsprozedur werden die sicherheitsrelevanten Informationen trotz Vorliegen anderer Bedingungen, wie beispielsweise korrekte Versorgungsspannung und Taktfrequenz, gelöscht. Der Versuch, die sicherheitsrelevanten Informationen in einer ungesicherten Umgebung aus dem Sicherheitsmodul auszulesen, kann dadurch wirksam verhindert werden.

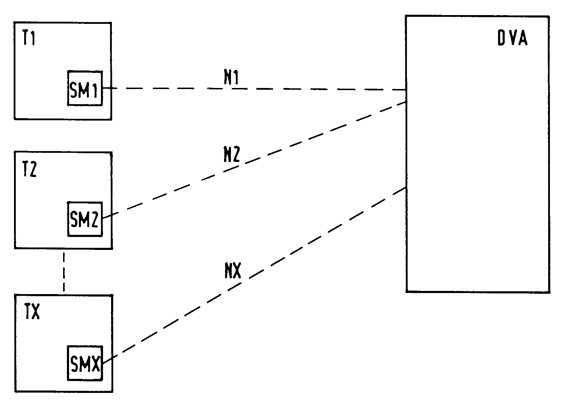

Ausgestaltungen und Weiterbildungen der Erfindung sind in Unteransprüchen angegeben. Ein Ausführungsbeispiel der Erfindung wird im folgenden anhand der Zeichnung näher erläutert.

Die Figur zeigt ein Blockschaltbild mehrerer, mit einer Datenverarbeitungsanlage verbundener Terminals.

An eine zentrale Datenverarbeitungsanlage DVA sind eine Mehrzahl von Terminals T1, T2...Tx gekoppelt. Die Koppelung erfolgt mittels privater oder öffentlicher Nachrichtennetze N1, N2...Nx. Die Terminals T1, T2...Tx sind jeweils einem Anwender zugeordnet. Zur Sicherung des Datenverkehrs von einem Anwender zur zentralen Datenverarbeitungsanlage DVA sind in den Terminals T1, T2...Tx jeweils anwenderspezifische Schlüssel enthaltende Sicherheitsmodule SM1, SM2...SMx vorgesehen. Die Datenverarbeitungsanlage DVA akzeptiert nur Terminals T1, T2...Tx mit Sicherheitsmodulen SM1, SM2...SMx, die sich erfolgreich gegenüber der Datenverarbeitungsanlage DVA authentifizieren können. Die Authentifikation erfolgt, wie beispielsweise aus dem Artikel "Chipkarten praktisch und sicher", Telematik Magazin 1/1988, Seite 8 bis 12 bekannt, durch gegenseitigen Austausch verschlüsselter Informationen nach der "Challenge and Response-Methode". Entsprechendes gilt auch umgekehrt. Ein Sicherheitsmodul SM akzeptiert nur eine Datenverarbeitungsanlage DVA, die sich auch erfolgreich gegenüber dem Sicherheitsmodul SM authentifiziert.

Bei jeder Authentifikation teilt das Sicherheitsmodul SM der Datenverarbeitungsanlage DVA einen beispielsweise von einem Zufallsgenerator im Sicherheitsmodul SM bestimmten Zeitabstand mit, an dem eine weitere Authentifikationsprozedur durchgeführt werden soll. Eine Authentifikationsprozedur wird grundsätzlich von der Datenverarbeitungsanlage DVA angestoßen. Ein Start der Authentifikationsprozedur von Seiten eines Sicherheitsmoduls SM ist demnach unmöglich.

Zusätzlich zum Zeitabstand teilt das Sicherheitsmodul SM der Datenverarbeitungsanlage DVA die Dauer eines Zeitfensters mit, in das der nachfolgende Anstoß zum Ablauf der Authentifikationsprozedur fallen muß. Die Lage dieses Zeitfensters zum festgelegten Zeitabstand und die absolute Länge des Zeitfensters wird jeweils zufällig beispielsweise durch einen Zufallsgenerator des Sicherheitsmoduls SM bestimmt.

Das Sicherheitsmodul SM überwacht mit Hilfe einer im Sicherheitsmodul SM enthaltenen Zeitbasis die Einhaltung des Zeitabstandes und des Zeitfensters zum Anstoß einer Authentifikationsprozedur. Wird diese Authentifikationsprozedur nicht im vorgegebenen Zeitfenster angestoßen, veranlaßt die Steuerung des Sicherheitsmoduls SM das Löschen der sicherheitsrelevanten Informationen. Das Sicherheitsmodul SM ist dann unbrauchbar und kann nur in gesicherter Umgebung, beispielsweise beim Netzbetreiber der Datenverarbeitungsanlage DVA, wieder mit sicherheitsrelevanten Informationen versorgt und damit funktionsfähig gemacht werden.

Da die vom Sicherheitsmodul SM festgelegten Zeitabstände und Zeitfenster aufgrund der verschlüsselten Übertragung zur Datenverarbeitungsanlage DVA nur der Datenverarbeitungsanlage DVA bekannt sind und aufgrund der zufälligen Bestimmung auch nicht vorhersehbar sind, ist es bei Entfernen des Sicherheitsmoduls SM aus dem Terminal T und damit einer Trennung von der Datenverarbeitungsanlage DVA nicht möglich, die sicherheitsrelevanten Informationen dauerhaft im Sicherheitsmodul SM zu erhalten. Ein unberechtigtes Benutzen des Sicherheitsmoduls SM, das unter Beibehaltung der Spannungs- und Taktversorgung aus dem Terminal gestohlen wurde, ist damit zeitlich beschränkt.

## Patentansprüche

1. Verfahren zur Sicherung sicherheitsrelevanter Informationen in einem mit einer zentralen Datenverarbeitungsanlage (DV) gekoppelten Sicherheitsmodul (SM) eines Terminals (T), mit einer
- von der Datenverarbeitungsanlage (DVA) angestoßenen Authentifikation zwischen dem Sicherheitsmodul (SM) und der Datenverarbeitungsanlage (DVA),
- Wiederholung der Authentifikation in einem vom Sicherheitsmodul (SM) des Terminals (T) bestimmten, der Datenverarbeitungsanlage (DVA) bei der vorhergehenden Authentifikation übermittelten Zeitabstand, und
- Zerstörung der sicherheitsrelevanten Information im Sicherheitsmodul (SM) bei negativem Authentifikationsverlauf und/oder Überschreitung des der Datenverarbeitungsanlage (DVA) mitgeteilten Zeitabstandes.

2. Verfahren nach Anspruch 1 mit einer vom Sicherheitsmodul (SM) des Terminals (T) bestimmten, der Datenverarbeitungsanlage (DVA) gemeinsam mit dem Zeitabstand mitgeteilten Zeitfenster, während der die Wiederholung der Authentifikationsprozedur von der Datenverarbeitungsanlage (DVA) anzustoßen ist.

3. Verfahren nach einem der Ansprüche 1 oder 2, mit einer jeweils zufälligen Bestimmung des Zeitabstandes und/oder des Zeitfensters durch das Sicherheitsmodul (SM).

4. Verfahren nach einem der vorhergehenden Ansprüche, mit einer verschlüsselten Übermittlung des Zeitabstandes und/oder Zeitfensters vom Sicherheitsmodul (SM) zur Datenverarbeitungsanlage (DVA).
